# EUROPEAN PATENT APPLICATION

(11) **EP 3 905 064 A1**
(43) Date of publication of application: **03.11.2021**
(21) Application number: 19903920.7
(22) Date of filing: 26.12.2019
(51) Int. Cl.: G06F 16/27

(54) **METHOD AND APPARATUS FOR SYNCHRONOUSLY REPLICATING DATABASE**

(30) Priority: 29.12.2018 CN 201811640691
(71) Applicant: ZTE Corporation, Shenzhen, Guangdong 518057 (CN)
(72) Inventor: ZHOU, Riming, Shenzhen, Guangdong 518057 (CN)
(74) Representative: Studio Torta S.p.A.
(86) International application number: PCT/CN2019/128558
(87) International publication number: WO 2020/135551

(57) **Abstract**

Disclosed are a method and apparatus for synchronously replicating a database. The method comprises: setting a priority level (S10); extracting changed source table data from a source database (S20); and loading the converted source table data into a destination database based on the priority level (S30).

## Description

### FIELD OF THE INVENTION

The present disclosure relates to the field of database technology, and in particular to a method and apparatus for synchronous replication of a database.

### BACKGROUND OF THE INVENTION

In terms of different application scenarios, a database is typically classified into two subsystems, i.e., online transaction database (OLTP) and online analytical database (OLAP). In daily use and maintenance, data of a completed transaction is extracted from the OLTP subsystem and loaded into the OLAP subsystem, which is generally referred to as an unloading process or an ETL (Extract, Transfer, Load) process. Here, the former is called a source database, and the latter is called a destination database.

With execution of online business, the source database generates new change data. This part of change data is generally extracted and filtered from an archive log file (or archive log stream) according to an order of the source database completing transactions, and then parsed and loaded to the destination database.

Since change data of the source database is carried out in a unit of database transaction, one database transaction involves operations onto multiple tables, and will be thus loaded into multiple tables of the destination database, where these multiple tables involved are called destination tables. Some tables may be more crucial for analysis, such as a customer accounts table, and some tables are not quite urgent for analysis, such as a branch sub-business table. Here, the former tables are called core tables and the latter ones are called peripheral tables.

Based on these, it is found out by the inventor of the present disclosure that, the source database operates on both the core table and the peripheral table during a transaction. Rather, as for the destination database, some analyses just singly working onto the core table and having a higher priority require the transmission and loading to be completed in a shorter time, while the peripheral table is deemed to be relatively less urgent. However, the unloading process carried out in a unit of transaction cannot distinguish data of change of the core table from that of the peripheral table. Instead, data of change of both the core table and the peripheral table are transmitted and loaded together through a network, taking up more time overhead.

The information disclosed in the background is merely intended to enhance the understanding of the overall background of the present disclosure, and should not be regarded as an acknowledgement or any form of suggestion that the information has constituted the prior art already known to those of ordinary skill in the art.

### SUMMARY OF THE INVENTION

Embodiments of the present disclosure provide a method and apparatus for synchronous replication of a database. The embodiments of the present disclosure are implemented through the following aspects.

In a first aspect, an embodiment of the present disclosure provides a method for synchronous replication of a database, including: setting a priority; extracting source table data that has changed from a source database; and loading the converted source table data into a destination database based on the priority.

In a second aspect, an embodiment of the present disclosure provides an apparatus for synchronous replication of a database, including: a strategy module configured to set a priority; an extraction module configured to extract source table data that has changed from a source database; and a loading module configured to load the converted source table data into a destination database based on the priority.

In a third aspect, an embodiment of the present disclosure provides an electronic device, including: a memory, a processor, and computer-executable instructions stored on the memory and executable on the processor, wherein the computer-executable instructions, when executed by the processor, cause the steps of the method of the first aspect to be implemented.

In a fourth aspect, an embodiment of the present disclosure provides a computer-readable storage medium storing computer-executable instructions, which, when executed by the processor, cause the steps of the method of the first aspect to be implemented.

In a fifth aspect, an embodiment of the present disclosure provides a computer program product including a computer program stored on a non-transitory computer-readable storage medium, the computer program including program instructions which, when executed by a computer, cause the computer to carry out the methods of the above aspects.

### BRIEF DESCRIPTION OF THE DRAWINGS

In order to more clearly describe the technical solutions in the embodiments of the present disclosure or the existing solutions in the art, accompanying drawings needed in the description of the embodiments or the existing solutions will be briefly introduced below. Apparently, the drawings in the following description are only refers to some embodiments described in the present disclosure. For those of ordinary skill in the art, other drawings can be obtained based on these drawings without any inventive labour involved.
Fig. 1 shows a schematic flowchart of a method for synchronous replication of a database according to an embodiment of the present disclosure;
Fig. 2 shows another schematic flowchart of a method for synchronous replication of a database according to an embodiment of the present disclosure;
Fig. 3 shows another schematic flowchart of a method for synchronous replication of a database according to an embodiment of the present disclosure;
Fig. 4 shows another schematic flowchart of a method for synchronous replication of a database according to an embodiment of the present disclosure;
Fig. 5 shows a schematic structural diagram of an apparatus for synchronous replication of a database according to an embodiment of the present disclosure; and
Fig. 6 shows a schematic diagram of hardware structure of an electronic device that implements a method for synchronous replication of a database according to an embodiment of the present disclosure.

### DETAILED DESCRIPTION OF THE EMBODIMENTS

In order to facilitate better understanding of the technical solution of the present disclosure by those of ordinary skill in the art, the technical solutions of the embodiments of the present disclosure will be described clearly and completely below in conjunction with accompanying drawings. Apparently, the embodiments described herein merely constitute a portion, rather than the whole, of the embodiments of the present disclosure. On the basis of the embodiments of the present disclosure, all other embodiments obtained by those of ordinary skill without any inventive labour involved should fall within the protection scope of the present disclosure.

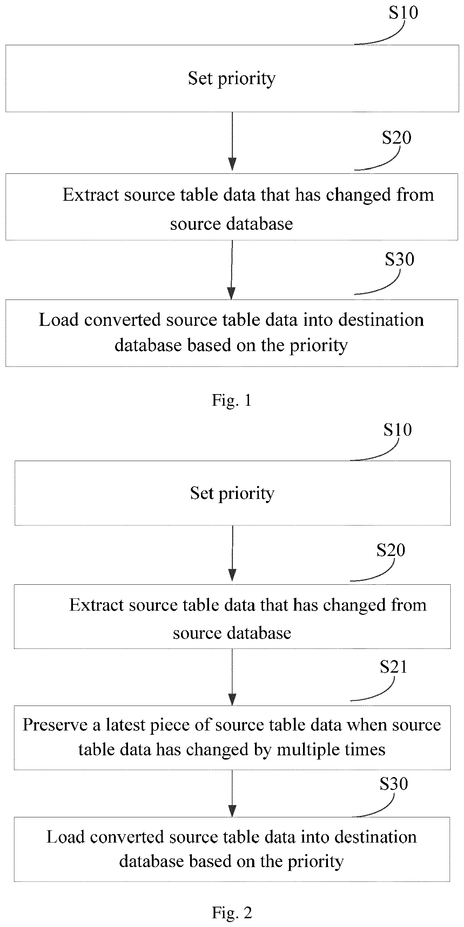

Fig. 1 shows a schematic flowchart of a method for synchronous replication of a database according to an embodiment of the present disclosure. The method may be carried out by an electronic device, such as a terminal device or a server device. In other words, the method can be executed by software or hardware installed on the terminal device or the server device. The server device includes, but is not limited to, a single server, server cluster, a cloud server or cloud server cluster, etc. As shown in the figure, the method may include the following steps S10 to S30.

At step S10, priority is set.

For example, a higher priority may be set for table data that is required to complete transmission and loading in a short time, and vice versa, a lower priority may be set for table data that is not to be processed in a hurry. For example, a priority of a core table is higher, which may be set to 1, while a priority of a peripheral table is lower, which may be set to 2, 3, etc.

In this step, the priority may be set based on a subscription rule sent by a destination database, or the priority may be set based on a distribution strategy of a source database.

Specifically, setting of a static priority may be included, which includes:
setting a priority of the source table, directly, as below:
   *set priority ST1=1, ST2=2;*
   setting priorities in company with a conversion statement as below:
      *Select A, B, C from ST1 into DT1 with priority=2;*
   setting priorities on a destination table as below:
      *Select A, B, C from ST1 into DT1; Select D, E, F from ST2 into DT2; set priority DT1=1, DT2=2.*

At step S20, source table data that has changed is extracted from a source database.

An example thereof is an archive log.

At step S30, based on the priority, the converted source table data is loaded into a destination database.

When source table data with a higher priority is loaded, it will be processed first in respect of CPU processing time, network transmission, and the like.

Therefore, in the method for synchronous replication of a database provided by the embodiment of the present disclosure, a priority is set, source table data that has changed is extracted from the source database, and the converted source table data is loaded into the destination database based on the priority, so that crucial data can be loaded as quickly as possible, network delay can be reduced, time overhead can be saved, and network transmission strategy can be optimized.

Fig. 2 shows another schematic flowchart of a method for synchronous replication of a database provided by an embodiment of the present disclosure. The method may be carried out by an electronic device, such as a terminal device or a server device. In other words, the method can be executed by software or hardware installed on the terminal device or the server device. The server device includes, but is not limited to, a single server, server cluster, a cloud server or cloud server cluster, etc. As shown in the figure, the method may include the following steps S10 to S30.

At step S10, priority is set.

For example, a higher priority may be set for table data that is required to complete transmission and loading in a short time, and vice versa, a lower priority may be set for table data that is not to be processed in a hurry. For example, a priority of a core table is higher, which may be set to 1, while a priority of a peripheral table is lower, which may be set to 2, 3, etc.

At step S20, source table data that has changed is extracted from a source database.

An example thereof is an archive log.

After step S20, further included is step S21, in which when the source table data has changed by multiple times, a latest piece of source table data is preserved.

When the same record undergoes multi-times change operations, these multi-times change operations may be merged together and only final data of the last operation is retained so that transmission bandwidth and processing time can be saved.

This step includes two implementation approaches. One is to retain both an original record value of the first change record and a new record value of the latest change record. The other is to transmit only the new record value of the latest change record without retaining the original record value of the first change record.

At step S30, based on the priority, the converted source table data is loaded into a destination database.

When source table data with a higher priority is loaded, it will be processed as priority in respect of CPU processing time, network transmission, and the like.

In a possible implementation, a dynamic priority may be calculated according to a weighting parameter and said priority.

With the number of change records increasing, a table without a high priority equally needs to be synchronized to the destination database as soon as possible, because its impact on a statistical result of a downstream system would expand in such situation. In addition to the above-mentioned static priority strategy, a dynamic priority may be provided to solve this problem.

An idea about implementing of the dynamic priority is to dynamically increase a related weight. For a table, a specific priority level is not necessarily specified, but a weighting parameter *weight* is set. According to an impact of the table on the statistical result, a weight of each record is converted with a reduction. For example, if there are 100 change records in Table B, and an impact thereof is equivalent to one change record of Table A, then a weight of each record in Table B is 0.01. Besides, for a table with a high priority, a default weight is 1.

A method for setting a weighting parameter includes:
1) setting a priority of the source table, directly, as below:
   *"Set weight ST1=0.1, ST2=0.01;"*
2) setting priorities in company with a conversion statement as below:
   *"Select A, B, C from ST1 into DT1 with weight = 0.1;"*
3) setting priorities on a destination table as below:
   *"Select A, B, C from ST1 into DT1; Select D, E, F from ST2 into DT2; set weight DT1 = 0.1, DT2 = 0.01;"*

The calculation process of the dynamic priority is explained below.

At step 1), a record count (i.e., the number of times of change) in an analysis queue is multiplied by a record weight (i.e., the weighting parameter) of the table to obtain a weighted record count.

At step 2), weighted record counts of respective analysis queues are compared. The greater a weighted record count is, the higher its priority is.

Because there are many analysis queues, the weighted record counts calculated for respective analysis queues are different from one another. For example, if there are 100

tables, then 100 different weighted record counts may be calculated. Here, intervals are divided according to the number of priority levels. For example, there are three priority levels, and the 100 different counts are divided into three intervals and thus assigned to the three different priority levels.

In a possible implementation, when the dynamic priority is higher than said priority, the dynamic priority may be set as the priority.

Some tables are provided with the static priorities and some tables are provided with the dynamic priorities. Examples are as follows:
*"Select A, B, C from ST1 into DT1 with priority=2;*
*Select D, E, F from ST2 into DT2 with weight 0.1;"*

When such a mixed situation occurs, there may be a processing strategy. Firstly, the calculation of dynamic priority as above is performed to obtain a dynamic priority of each table queue, and then the dynamic priority of each table queue is compared with a static priority thereof. If a level of the dynamic priority is higher than a level of the static priority, then the dynamic priority shall prevail; if the level of the dynamic priority is lower than that of the static priority, then the static priority shall prevail. In other words, the maximum of these two is taken.

In a possible implementation, a weighting parameter may be adjusted according to an operation type.

Some statistical types are sensitive to specific change of the table. For example, with respect to a statistic of newly increased data volume, only an INSERT operation is meant to be more sensitive and thereby can be set separately with a higher weight or a fine-tuned weight. Examples are as follows:
*"Select A, B, C from ST1 into DT1 with insert_weight = 0.1 and update_weight = 0.01 and delete_weight = 0.01;"*
*"Select A, B, C from ST1 into DT1 with priority* = 2 *and insert_weight = 0.1 and update_weight = 0.01 and delete_weight = 0.01;"*

Since three operation types of INSERT/ UPDATE/ DELETE have been distinguished from one another when an archive log is parsed and record counts of the respective operation types have been also recorded in the statistical information, it is applicable to weight each of the operation types and sum them up, and then carry out calculation according to the calculation process of dynamic priority or the fine-tuning of dynamic priority.

If a weight of the total of record counts is additionally provided in the strategy statement, it is applicable to select the maximum of these two as a final weight. For example, if the sum of respective weighted operations is greater than the weight of the total record counts, then the former is selected, and vice versa.

In a possible implementation, the priority may be adjusted according to a preset fine-tuning strategy.

For example, the static priority serves as a major component, and each priority level is further fine-tuned in terms of the number of records. An example is as follows:
*"Select A, B, C from ST1 into DT1 with priority=2 and weight*=*0.01;"*

This strategy defines by itself a static priority for the table, but at the same time a higher priority level is still attainable as the record count increases.

A priority of this strategy does not have to be compared with other table queues. As long as the record count multiplied by the weighting parameter (*weight*) is greater than 1, the priority will be upgraded by one level. If the weighted result is less than 1, then the static priority is still employed.

In a possible implementation, after the source table data that has been changed is extracted from the source database, statistics on the source table data may be performed, and the priority may be adjusted according to a result of the statistics.

While parsing each table, a parsing module counts the number of records corresponding to each table and preserves it in a parsing queue. After the parsing queue sends the corresponding record count to a downstream segment, it updates a statistical count of the queue. Then, statistics is performed on the source table data, and the priority thereof is adjusted according to a result of the statistics.

The step of loading the converted source table data into the destination database based on the priority may include the following strategy.

In order to import a table with high priority into the destination database in a speedy manner, various resource control strategies can be used. Methods as below are included:
1. Tables with varied priorities are assigned with different processing or threading, and priorities for these pieces of processing or threading are set through an operating system-level API so that processing or threading with a higher priority can be scheduled speedily.
2. In one and same piece of processing or threading, a task of a queue having the highest priority is treated as priority for each time. Only tasks with high-priority have been processed, tasks with low-priority can be processed then.
3. When a task with low-priority is processed in one and same piece of processing or threading, in a specific sub-process, checking is performed on whether there is a task with high-priority to be processed. If there is the task with high-priority, a sub-process of the task with low-priority is suspended so as to firstly deal with the task with high-priority, and then the task with low-priority are resumed.
4. In a heavy business period of time, tasks with low-priority are suspended so that only tasks with higher priority are processed. The tasks with low-priority are to be processed once processing pressure is relieved. In an approach of suspending the tasks with low-priority, data in a queue with low-priority may be temporarily settled in disc and to be processed when it is resumed.

In respect of network transmission, transmission is performed according to the priority. Methods as below are included:
1. In a distribution (sub-)module, change data in a queue with high-priority is transmitted firstly. Only the change data with high-priority has been delivered, change data in a queue with low-priority can be transmitted then.
2. Data with various priorities are allocated with different links, and varied network service levels are configured through a network layer. Strategies related thereto are: a priority based on CoS field on Layer 2 (IEEE802.1p), a TOS priority based on IP Precedence field on IP layer, and a priority based on DSCP (Differentiated Services Codepoint) field on IP layer. These strategies are related to the network environment, and are applicable for a local area network.
3. Queues with different priorities are equipped with networks with different paths. A queue with high-priority is delivered through a network with shorter delay and larger bandwidth (such as optical fiber, private network), and a queue with low-priority is delivered through a shared network. This strategy is applicable for the situation that data centres are crossed with geographic distance.

Therefore, in the method for synchronous replication of a database provided by the embodiment of the present disclosure, a priority is set, source table data that has changed is extracted from the source database, and the converted source table data is loaded into the destination database based on the priority, so that crucial data can be loaded as quickly as possible, network delay can be reduced, time overhead can be saved, and network transmission strategy can attain optimization.

Further, in the method for synchronous replication of a database provided by the embodiment of the present disclosure, in the case that the source table data has changed by multiple times, preserving of the latest piece of source table data enables merging transmission so that a data volume to be transmitted is considerably decreased and data traffic of network transmission can be saved.

Further, in the method for database synchronization replication provided by the embodiment of the present disclosure, synchronization process of tables can be finely controlled through configuration of various dynamic priority strategies, so that specific application scenario requirements of a business layer can be meet, and an impact on the statistical result can be minimized while the synchronization efficiency is improved.

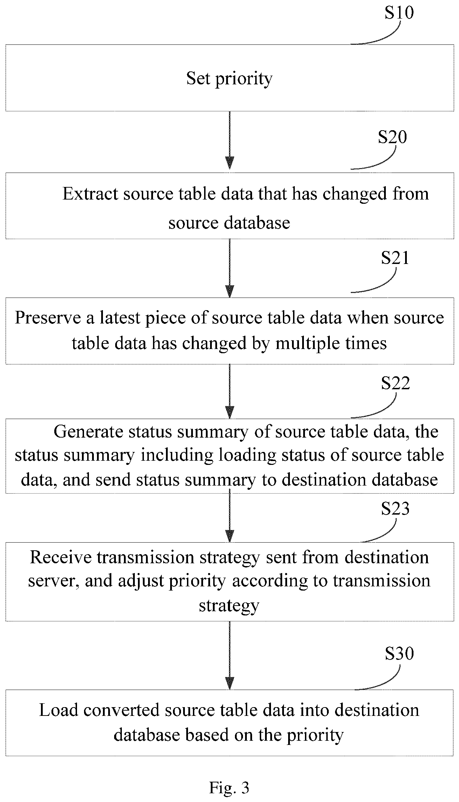

Fig. 3 shows another schematic flowchart of a method for synchronous replication of a database provided by an embodiment of the present disclosure. The method may be carried out by an electronic device, such as a terminal device or a server device. In other words, the method can be executed by software or hardware installed on the terminal device or the server device. The server device includes, but is not limited to, a single server, server cluster, a cloud server or cloud server cluster, etc. As shown in the figure, the method may include the following steps S10 to S30.

At step S10, priority is set.

For example, a higher priority may be set for table data that is required to complete transmission and loading in a short time, and vice versa, a lower priority may be set for table data that is not to be processed in a hurry. For example, a priority of a core table is higher, which may be set to 1, while a priority of a peripheral table is lower, which may be set to 2, 3, etc.

At step S20, source table data that has changed is extracted from a source database.

An example thereof is an archive log.

At step S21, the latest piece of source table data is preserved when the source table data has changed by multiple times.

When the same record undergoes multi-times change operations, these multi-times change operations may be merged together and only final data of the last operation is retained so that transmission bandwidth and processing time can be saved.

At step S22, a status summary of the source table data is generated, the status summary including a loading status of the source table data, and the status summary is sent to the destination database.

For example, a delay summary table may be introduced to let the destination database know delay profile of current data. The delay summary table records how much data delay that the tables on the current destination database are suffering from. Although the change data of these tables has not yet been synchronized to the destination database, a parsing module at the source side has synchronized the statistical data to the delay summary table in advance. According to the delay summary table, the destination database can determine that how much difference exists between the data of the current tables to be queried and the data of the source database.

Similar to a metadata table, the database has some statistics summary system tables that record data profile of each table, such as the total number of rows in a table. Similar to a strategy table, the delay summary table may also be implemented in two approaches. One is to expand summary information of the above delay onto an existing statistics summary system table. Also, it is applicable to expand a new system table (a delay summary table) to describe in a separate manner. Here, the approach using the new system table is described in detail, but above-mentioned expansion onto the existing system table is based on the similar methodology.

The delay summary table may include Field 1 for a table name, Field 2 for the total number of records, Field 3 for a synchronized time, Fields 4 to 6 for the number of times to be synchronized with respect to the three operation types (INSERT/UPDATE/DELETE), and Field 7 for the total number of times to be synchronized. The Field 1 may also be an implementation representation of the table within the database, such as an object unique index (OID) of the table. The total number of records in Field 2 has already undergone statistics in the existing database, so it is applicable to employ the original statistics table directly or provide no such field in the table. The Field 2 is described here to facilitate better understanding.

Here, some additional explanation is provided for the Field 3, i.e., a synchronized time. If there is no change record in the table to be processed, this field is set to null, indicating that synchronization has been done in real time.

At step S23, a transmission strategy sent from a destination server is received, and the priority is adjusted according to the transmission strategy.

The transmission strategy sent from the destination server includes a requirement defined by the destination server regarding strategies of transmission priority, etc. A user of the destination database may configure a delay time or a delay extent of the table according to the case of a specific business. Therefore, the destination database is allowed to raise the requirement about the delay of the table through this step. Also, the requirement about the delay can be specified at the moment of a query.

For example, a real-time transmission strategy of the table may be configured in two ways: the first is to configure the strategy at the moment of creating the table (CREATE TABLE); the second is to specify it in a query statement (SELECT).

In the first way, a clause allowing the delay is expanded in a table creation statement (DDL). Examples of expanding manner are as below:
*1) CREATE TABLE A(a int,b varchar,...)with allow_delay_time*=*5s*;
*2) CREATE TABLE A(a int,b varchar,...) with allow_delay_ratio*=*5%*;
*3) CREATE TABLE A(a int,b varchar,...) with allow_insert_delay_ratio*=*5%*;
*4) CREATE TABLE A(a int,b varchar,...) with allow_update_delay_ratio*=*5%*;
*5) CREATE TABLE A(a int,b varchar,...) with allow_delete_delay_ratio*=*5%*;
*6) CREATE TABLE A(a int,b varchar,...) with allow_delay_time*=*5s and allow_delay_ratio*=*5%*;

In the second way, a condition allowing the delay is expanded in a query SQL (DQL). Examples of expanding manner are as below:
*1) SELETE a,b,...FROM A where@allow_delay_time*=*5s*;
*2) SELETE a, b,... FROM A where@allow_delay_ratio*=*5%*;
*3) SELETE a, b,... FROM A where@allow_insert_delay_ratio*=*5%*;
*4) SELETE a, b,... FROM A where@allow_insert_delay_ratio*=*5% and @allow_update_delay_ratio*=*5%*;

In the above expansion clause, the following keywords are present:
1) Allowed delay time (*allow_delay_time*);
2) Allowed delay ratio (*allow_delay_ratio*);
3) Allowed delay ratio of the number of times of INSERT (*allow_insert_delay_ratio*);
4) Allowed delay ratio of the number of times of UPDATE (*allow_update_delay_ratio*);
5) Allowed delay ratio of the number of times of DELETE (*allow_delete_delay_ratio*);

Rules for making a judgement are described as follows.

For the allowed delay time, if a difference between a synchronized time of the table in the delay summary table and the current time of the destination database is greater than the allowed delay time, then the requirement is not met.

For the allowed delay ratio, if a ratio of the total number of times to be synchronized of the table in the delay summary table to the total number of records of the table is greater than the allowed delay ratio, then the requirement is not met.

For the allowed delay ratio of the number of times of INSERT, if a ratio of the number of times of INSERT to be synchronized of the table in the delay summary table to the total number of records of the table is greater than this allowed delay ratio, then the requirement is not met.

For the allowed delay ratio of the number of times of UPDATE, if a ratio of the number of times of UPDATE to be synchronized of the table in the delay summary table to the total number of records of the table is greater than this allowed delay ratio, then the requirement is not met.

For the allowed delay ratio of the number of times of DELETE, if a ratio of the number of times of DELETE to be synchronized of the table in the delay summary table to the total number of records of the table is greater than this allowed delay ratio, then the requirement is not met.

These keywords can be combined by means of AND condition. Semantically, if one certain item fails to meet the allowed delay requirement, then the requirement about the delay is failed to be met.

Analysis of the real-time transmission strategy includes that: a SQL parser expands a corresponding syntax tree to analyze the above SQL clause. When the above SQL is processed by the SQL parser, the extended clause is parsed into an attribute name and attribute values of a specific table. Specifically, the SQL parser adds related syntactic keywords, and syntactic formats of the extended clauses (using equivalent expressions).

A syntax tree is composed of a plurality of different types of syntax node structures (called Nodes hereafter). With respect to a table creation statement and a query statement, corresponding syntax node structures are expanded:
1) The syntax tree of the table creation statement (CREATE TABLE) expands five attributes of a table Node. After the table creation statement is parsed, corresponding attribute values are associated with names of the five attributes of the table, i.e., the five keywords mentioned above.
2) The syntax tree of the query statement (SELECT) expands five attributes of a table scanning Node. After the query statement is parsed, corresponding attribute values are associated with names of the five attributes of the table scanning Node.

If a real-time transmission strategy is expended in the CREATE TABLE statement, the strategy needs to be persistently stored in the database. Generally, it is stored in a metadata database of the database, and a system table is used to store metadata information of all tables. One approach is to expand the above five fields onto an existing system table. Also, it is applicable to create a new system table (a real-time transmission strategy table) by itself to describe in a separate manner. Here, the approach using the new system table is described in detail, but above-mentioned expansion onto the existing system table is based on the similar methodology.

The real-time transmission strategy table may include Field 1 for a table name, Field 2 for an allowed delay time, and Field 3 for an allowed delay ratio.

Field 1 may also be an implementation representation of the table within the database, such as an object unique index (OID) of the table.

Field 2 may adopt either character description or a time type as long as each of them referring to a delay time.

Field 3 may also be divided into four specific types of fields (INSERT allowed delay rate, UPDATE allowed delay rate, DELETE allowed delay rate, and total number of times' allowed delay rate).

The delay strategy of the query statement (SELECT) merely functions during the execution of the statement, so persistent storage is not necessary.

At step S30, based on the priority, the converted source table data is loaded into a destination database.

Based on the priority, the source table data with varied priorities are allocated with different processing or threading, and then the converted source table data is loaded into the destination database. When source table data with a higher priority is loaded, it will be processed first in respect of CPU processing time, network transmission, and the like.

In a possible implementation, a dynamic priority may be calculated according to a weighting parameter and the priority.

In a possible implementation, when the dynamic priority is higher than the priority, the dynamic priority may be set as the priority.

In a possible implementation, a weighting parameter may be adjusted according to an operation type.

In a possible implementation, the priority may be adjusted according to a preset fine-tuning strategy.

In a possible implementation, after the source table data that has been changed is extracted from the source database, statistics on the source table data may be performed, and the priority may be adjusted according to a result of the statistics.

The synchronized time refers to that all change records prior to right this time have been synchronized to the destination database already. When parsing a log, the parsing module records the current time into each change record (a time stamp field) in a parsing queue. After the parsing queue distributes the change data to a conversion module, the time stamp field of the change record is picked out and updated into the synchronized time field of the statistical data. The statistical data is finally transmitted from a real-time scheduling server to a real-time scheduling client, and written into a delay summary table by the latter. Further, if the change record in the parsing queue has been processed, the parsing module labels the synchronized time of the table as null, which means that the change data of the table has been synchronized in real time.

However, there is still an error in this manner, because the change record may just only be distributed from the parsing module to the conversion module, but has not been imported to the destination database yet. A correct implementing manner is that a feedback is not delivered to the statistical data until an import module imports the changed data into the destination database. In order to reflect the synchronized time in a more accurate manner, after importing the change data, the import module takes out the time stamp field from the change record, and then feeds it to a conversion module. The conversion module obtains a true synchronized time of the source table through a mapping relationship between the source table and the destination table. Then, the true synchronized time of the source table is fed to the parsing module by the conversion module, updated into the synchronized time field of the statistical table by the parsing module, and thereby synchronized to the delay summary table of the destination database.

Regarding the real-time scheduling client, a SQL executor performs processing according to a parsed execution tree. When the processing proceeds to the table scanning Node, an interface of the real-time scheduling client needs to be called, and then the real-time scheduling client returns whether the related table meets the allowed delay requirement nor not. A specific interface is as below:
*bool is_delay_allowed*(*char*^{∗}*table_names*);

An input parameter is a name of the table or an object unique index (OID) of the table. In the possible case that there are a plurality of tables, and the plurality of tables are transmitted at one time by using delimiters (such as commas).

An on-demand scheduling client compares the information from the delay summary table with the real-time transmission strategy table. The calculation approach related to the comparison is described in the chapter about the syntax of the real-time transmission strategy. If the delay requirement is met, then success is returned; if the delay requirement is failed to be met, then failure is returned.

In a possible implementation, when the real-time scheduling client detects that the delay requirement is failed to be met, it initiates a real-time scheduling request to the real-time scheduling server. The real-time scheduling server notifies the parsing module to process the remaining un-transmitted change data with the highest priority.

The on-demand scheduling client will not hand over the processing to the SQL executor until all delayed data has been transmitted to the destination database.

Since the statistical data changes during transmission of the data, the real-time scheduling server keeps synchronizing the statistical data to the delay summary table in real time, and the real-time scheduling client periodically queries the delay summary table and performs re-judgment, and dose not return from the function call until the delay requirement is met. After this, the SQL executor performs the process of reading table data.

Regarding the real-time scheduling server, the real-time scheduling server synchronizes the statistical data to the real-time scheduling client in real time, and then the statistical data is written into the delay summary table by the latter.

There are several different implementations for synchronizing the statistical data in real time. Since a volume of the statistical data is very little and thereby the transmission overhead on the network is little, the real-time scheduling server periodically synchronizes the statistical data to the real-time scheduling client with a quite high frequency. A length of a timer is a time duration of the delay of the statistical data.

The second implementation is that the server calculates a change volume of the statistical data, and delivers it to the client for synchronization once the change volume reaches a certain extent. A calculation approach for the change volume is to sum up change values of the number of times to be synchronized for all the tables. When the sum reaches a certain value, the statistical data is synchronized to the client immediately.

Both of these approaches are of a push mode, which basically meet a real-time requirement. In a possible implementation, if the statistical data is required to be completely consistent in real time, the client may use a pull mode, in which an query can be actively proposed once towards the server when judgment on the delay is carried out.

In addition to synchronizing the statistical data to the client, the server further processes a real-time scheduling request from the client. As described in the above chapter about the real-time scheduling client, if the client determines that the data in the delay summary does not meet the allowed delay requirement, then it would initiate a scheduling command to the server. After receiving the scheduling command, the server delivers the scheduling command to the parsing module so that the parsing queue transmits the changed data with the highest priority. Here, the highest priority means immediate transmission.

Regarding a real-time scheduling relay, if there is no intermediate conversion happened between the source table and the destination table and the table names and fields of the source table and the destination table are identical, then the real-time scheduling client and the real-time scheduling server can communicate directly without going through the scheduling relay.

If the destination table is different from the source table in, for example, a table name, that is, the server's statistical data using a source table name, whereas the client using a destination table name, then they two have a mapping relationship in a conversion statement of the conversion module. As such, a relay module (the real-time scheduling relay) needs to be introduced into the conversion module. A function of this relay module is to find a corresponding destination table through the source table, or a corresponding source table through the destination table. A basis of the conversion is the conversion statement. Except for the conversion of table name, other information undergoes transparent transmission.

Therefore, in the method for synchronous replication of a database provided by the embodiment of the present disclosure, a priority is set, source table data that has changed is extracted from the source database, and the converted source table data is loaded into the destination database based on the priority, so that crucial data can be loaded as quickly as possible, network delay can be reduced, time overhead can be saved, and network transmission strategy can attain optimization.

Further, in the method for synchronous replication of a database provided by the embodiment of the present disclosure, in the case that the source table data has changed by multiple times, preserving of the latest piece of source table data enables merging transmission so that a data volume to be transmitted is considerably decreased and data traffic of network transmission can be saved.

Further, in a method for synchronous replication of a database provided by the embodiment of the present disclosure, by means of the status summary, a user of the destination database is enabled to accurately acquire transmission status of the data of each table, such as the delay profile.

Further, in a method for synchronous replication of a database provided by the embodiment of the present disclosure, by means of the transmission strategy, a user of the destination database is enabled to configure a delay time or a delay extent of the table according to the case of a specific business.

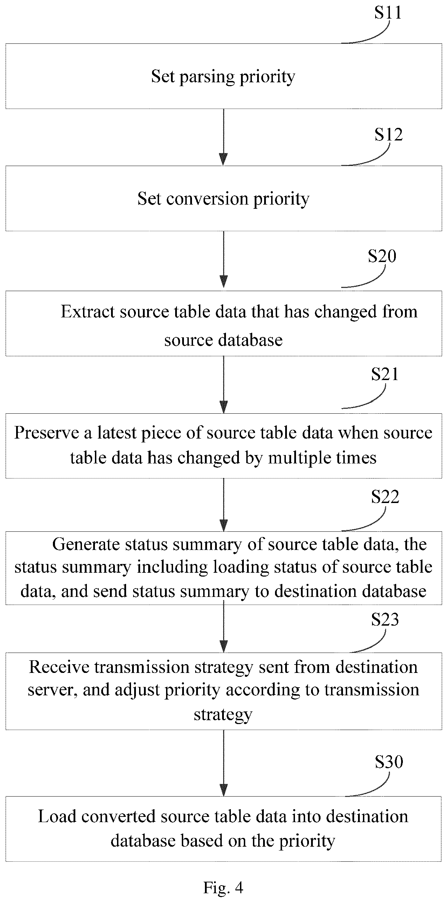

Fig. 4 shows another schematic flowchart of a method for synchronous replication of a database provided by an embodiment of the present disclosure. The method may be carried out by an electronic device, such as a terminal device or a server device. In other words, the method can be executed by software or hardware installed on the terminal device or the server device. The server device includes, but is not limited to, a single server, server cluster, a cloud server or cloud server cluster, etc. As shown in the figure, the method may include the following steps S10 to S30.

At step S10, priority is set.

For example, a higher priority may be set for table data that is required to complete transmission and loading in a short time, and vice versa, a lower priority may be set for table data that is not to be processed in a hurry. For example, a priority of a core table is higher, which may be set to 1, while a priority of a peripheral table is lower, which may be set to 2, 3, etc.

In a possible implementation, the step of setting priority may include steps S11 to S22.

At step S11, a parsing priority is set.

At step S12: a conversion priority is set.

At step S20, source table data that has changed is extracted from a source database.

An example thereof is an archive log. The source table data extracted from the source database is parsed according to the parsing priority.

The source table data extracted from the source database is converted according to the conversion priority.

At step S21, the latest piece of source table data is preserved when the source table data has changed by multiple times.

When the same record undergoes multi-times change operations, these multi-times change operations may be merged together and only final data of the last operation is retained so that transmission bandwidth and processing time can be saved.

At step S22, a status summary of the source table data is generated, the status summary including a loading status of the source table data, and the status summary is sent to the destination database.

For example, a delay summary table may be introduced to let the destination database acquire delay profile of current data. The delay summary table records how much data delay that the tables on the current destination database are suffering from. Although the change data of these tables has not yet been synchronized to the destination database, a parsing module at the source side has synchronized the statistical data to the delay summary table in advance. According to the delay summary table, the destination database can determine that how much difference exists between the data of the current tables to be queried and the data of the source database.

At step S23, a transmission strategy sent from a destination server is received, and the priority is adjusted according to the transmission strategy.

The transmission strategy sent from the destination server includes a requirement defined by the destination server regarding strategies of transmission priority, etc. Therefore, the destination database is allowed to raise the requirement about the delay of the table through this step. Also, the requirement about the delay can be specified at the moment of a query.

At step S30, based on the priority, the converted source table data is loaded into a destination database.

Based on the priority, the source table data with varied priorities are allocated with different processing or threading, and then the converted source table data is loaded into the destination database. When source table data with a higher priority is loaded, it will be processed first in respect of CPU processing time, network transmission, and the like.

In a possible implementation, a dynamic priority may be calculated according to a weighting parameter and the priority.

In a possible implementation, when the dynamic priority is higher than the priority, the dynamic priority may be set as the priority.

In a possible implementation, a weighting parameter may be adjusted according to an operation type.

In a possible implementation, the priority may be adjusted according to a preset fine-tuning strategy.

In a possible implementation, after the source table data that has been changed is extracted from the source database, statistics on the source table data may be performed, and the priority may be adjusted according to a result of the statistics.

Therefore, in the method for synchronous replication of a database provided by the embodiment of the present disclosure, a priority is set, source table data that has changed is extracted from the source database, and the converted source table data is loaded into the destination database based on the priority, so that crucial data can be loaded as quickly as possible, network delay can be reduced, time overhead can be saved, and network transmission strategy can attain optimization.

Further, in the method for synchronous replication of a database provided by the embodiment of the present disclosure, in the case that the source table data has changed by multiple times, preserving of the latest piece of source table data enables merging transmission so that a data volume to be transmitted is considerably decreased and data traffic of network transmission can be saved.

Further, in a method for synchronous replication of a database provided by the embodiment of the present disclosure, by means of the status summary, a user of the destination database is enabled to accurately acquire transmission status of the data of each table, such as the delay profile.

Further, in a method for synchronous replication of a database provided by the embodiment of the present disclosure, by means of the transmission strategy, a user of the destination database is enabled to configure a delay time or a delay extent of the table according to the case of a specific business.

Further, in a method for database synchronization replication provided by the embodiment of the present disclosure, synchronization process of tables can be finely controlled through configuration of the parsing priority and the conversion priority, so that specific application scenario requirements of a business layer can be meet, and an impact on the statistical result can be minimized while the synchronization efficiency is improved.

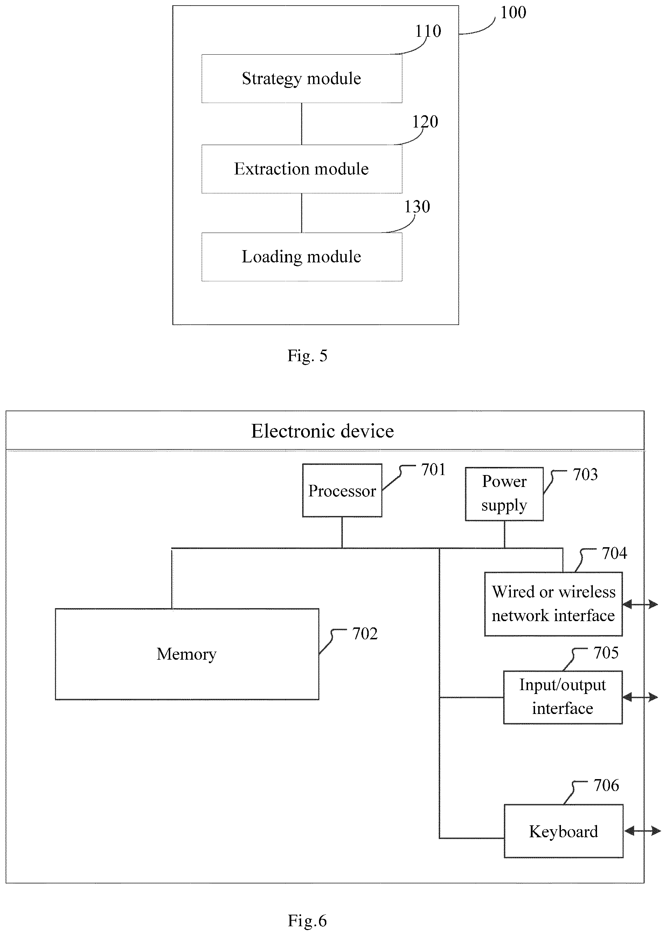

Fig. 5 shows a schematic structural diagram of an apparatus for synchronous replication of a database provided by an embodiment of the present disclosure. The apparatus 100 includes a strategy module 110, an extraction module 120, and a loading module 130.

The strategy module 110 is configured to set a priority. The extraction module 120 is configured to extract source table data that has changed from a source database. The loading module 130 is configured to load the converted source table data into a destination database based on the priority.

In a possible implementation, the extraction module 120 is configured to preserve a latest piece of source table data when the source table data has changed by multiple times.

In a possible implementation, the extraction module 120 is configured to, after extracting the changed source table data from the source database, generate a status summary of the source table data, which includes a loading status of the source table data, and to send the status summary to the destination database.

In a possible implementation, the extraction module 120 is further configured to, after extracting the changed source table data from the source database, receive a transmission strategy sent by the destination server and adjust the priority according to the transmission strategy.

In a possible implementation, the loading module 130 is configured to allocate processing or threading to the source table data with different priorities based on the priority, and to load the converted source table data into the destination database.

In a possible implementation, the strategy module 110 is configured to, before the source table data being extracted from the source database, set a parsing priority, and to parse the source table data extracted from the source database according to the parsing priority.

In a possible implementation, the strategy module 110 is configured to set a conversion priority, and to convert the source table data extracted from the source database according to the conversion priority.

In a possible implementation, the strategy module 110 is configured to calculate a dynamic priority according to a weighting parameter and the priority.

In a possible implementation, the strategy module 110 is configured to set the dynamic priority as the priority when the dynamic priority is higher than the priority.

In a possible implementation, the strategy module 110 is configured to adjust the weighting parameter according to an operation type.

In a possible implementation, the strategy module 110 is configured to adjust the priority according to a preset fine-tuning strategy.

In a possible implementation, the extraction module 120 is further configured to, after extracting the source table data that has changed from the source database, perform statistics on the source table data, and to adjust the priority according to a result of the statistics.

The apparatus 100 provided in the embodiment of the present disclosure can execute the methods described in the foregoing process embodiments, and realize the functions and beneficial effects of the methods described in the foregoing process embodiments, which will not be described here any further.

Fig. 6 shows a schematic diagram of hardware structure of an electronic device that implements a method for synchronous replication of a database provided by an embodiment of the present disclosure. As shown in the figure, the electronic device may have considerably difference due to varied configuration or performance, and may include one or more processors 701 and a memory 702 which stores one or more pieces of storage application program or data. The memory 702 may be of short-term storage or persistent storage. The application program stored in the memory 702 may include one or more modules (not shown in the figure), and each module may include a series of computer-executable instructions of the electronic device. In a possible implementation, a processor 701 may be configured to communicate with the memory 702, and execute through the electronic device a series of computer-executable instructions in the memory 702. The electronic device may further include one or more power supplies 703, one or more wired or wireless network interfaces 704, one or more input and output interfaces 705, and one or more keyboards 706, and so on.

In a specific embodiment, the electronic device includes a memory, a processor, and computer-executable instructions stored on the memory and executable on the processor, and the computer-executable instructions are executed by the processor to implement the following process flow: setting a priority; extracting source table data that has changed from a source database; and loading the converted source table data into a destination database based on the priority.

Therefore, the electronic device that executes a method for synchronous replication of a database provided by an embodiment of the present disclosure can carry out the methods described in the foregoing process embodiments, and realize the functions and beneficial effects of the methods described in the foregoing process embodiments, which will not be described here any further.

Server: A device that provides computing service. The composition of a server includes a processor, a hard disk, a memory, a system bus, etc. The server has architecture similar to the general computer architecture, but raises high requirements in respect of processing power, stability, reliability, security, expandability, and manageability etc. as highly reliable service has to be provided thereby. The server may be other electronic devices having data interaction function.

In a possible implementation, an embodiment of the present disclosure further provides a computer-readable storage medium configured to store computer-executable instructions, the computer-executable instructions, when executed by a processor, cause the following process flow to be implemented: setting a priority; extracting source table data that has changed from a source database; and loading the converted source table data into a destination database based on the priority.

Therefore, the computer-executable instructions, when executed by the processor, can carried out the methods described in the foregoing process embodiments, and realize the functions and beneficial effects of the methods described in the foregoing process embodiments, which will not be described here any further.

The computer-readable storage medium includes a Read-Only Memory (ROM), a Random Access Memory (RAM), a magnetic disk, or an optical disk and the like.

In a possible implementation, an embodiment of the present disclosure further provides a computer program product including a computer program stored on a non-transitory computer-readable storage medium, the computer program includes program instructions which, when executed by a computer, cause the following process flow to be implement: setting a priority; extracting source table data that has changed from a source database; and loading the converted source table data into a destination database based on the priority.

Therefore, execution of the computer program product provided by the embodiment of the present disclosure can carry out the respective methods described in the foregoing process embodiments, and realize the functions and beneficial effects of the respective methods described in the foregoing process embodiments, which will not be described here any further.

The various embodiments in this specification are described in a progressive manner. The same or similar parts among the various embodiments can make reference with each other, and focus of each embodiment are those difference from other embodiments. In particular, for the system embodiment, the description thereof is relatively brief since it is basically similar to the process embodiment, and the relevant can be referred to a part of the description of the process embodiment.

Those described above are merely specific embodiments of the present invention, rather than limitation to the present disclosure. For those skilled in the art, various modifications and changes may be performed onto this disclosure. Any modifications, equivalent replacements, improvements etc. that are made within the principle of the present invention shall fall within the scope of protection of the present disclosure.

## Claims

1. A method for synchronous replication of a database, **characterized by** comprising steps of:
setting (S10) a priority;
extracting (S20) source table data that has changed from a source database; and
loading (S30) the converted source table data into a destination database based on the priority.

2. A method according to claim 1, **characterized in that**, after extracting the source table data that has changed from the source database, the method further comprises:
preserving, when the source table data has changed by multiple times, a latest piece of source table data.

3. A method according to claim 1, **characterized in that**, after extracting the source table data that has changed from the source database, the method further comprises:
generating a status summary of the source table data, the status summary including a loading status of the source table data; and
sending the status summary to the destination database.

4. A method according to claim 1, **characterized in that**, after extracting the source table data that has changed from the source database, the method further comprises:
receiving a transmission strategy sent from a destination server, and adjusting the priority according to the transmission strategy.

5. A method according to claim 1, **characterized in that**, the step of loading the converted source table data into the destination database based on the priority further comprises:
allocating, based on the priority, processing or threading to the source table data with varied priorities, and loading the converted source table data into the destination database.

6. A method according to claim 1, **characterized in that**, the step of setting the priority further comprises:
setting, before extracting the source table data that has changed from the source database, a parsing priority, and parsing the source table data extracted from the source database according to the parsing priority.

7. A method according to claim 1, **characterized in that**, the step of setting the priority further comprises:
setting a conversion priority; and
converting the source table data extracted from the source database according to the conversion priority.

8. A method according to claim 1, **characterized in that**, the step of setting the priority further comprises:
calculating a dynamic priority according to a weighting parameter and the priority.

9. A method according to claim 2, **characterized in that**, the step of setting the priority further comprises:
setting, when the dynamic priority is higher than the priority, the dynamic priority as the priority.

10. A method according to claim 2, **characterized in that**, the step of setting the priority further comprises:
adjusting a weighting parameter according to an operation type.

11. A method according to claim 1, **characterized in that**, the step of setting the priority further comprises:
adjusting the priority according to a preset fine-tuning strategy.

12. A method according to claim 1, **characterized in that**, after extracting the source table data that has changed from the source database, the method further comprises:
performing statistics on the source table data; and
adjusting the priority according to a result of the statistics.

13. An apparatus (100) for synchronous replication of a database, **characterized by** comprising:
a strategy module (110) configured to set a priority;
an extraction module (120) configured to extract source table data that has changed from a source database; and
a loading module (130) configured to load the converted source table data into a destination database based on the priority.

14. An electronic device, **characterized by** comprising:
a processor (701); and
a memory (702) arranged to store computer-executable instructions which, when executed, cause the processor to execute operations of:
setting a priority;
extracting source table data that has changed from a source database; and
loading the converted source table data into a destination database based on the priority.

15. A computer-readable medium storing one or more programs, which, when executed by an electronic device including a plurality of application programs, cause the electronic device to carry out operations of:
setting a priority;
extracting source table data that has changed from a source database; and
loading the converted source table data into a destination database based on the priority.
